Europäisches Patentamt

European Patent Office

Office européen des brevets

(19)

(11) Numéro de publication: **0 267 109**
**B1**

(12) **FASCICULE DE BREVET EUROPEEN**

(45) Date de publication du fascicule du brevet:
**14.11.90**

(21) Numéro de dépôt: **87402456.5**

(22) Date de dépôt: **30.10.87**

(51) Int. Cl.⁵: **B23K 11/30**

(54) **Dispositif automatique de remplacement des électrodes d'un robot de soudage.**

(30) Priorité: **06.11.86 FR 8615491**

(43) Date de publication de la demande:
**11.05.88 Bulletin 88/19**

(45) Mention de la délivrance du brevet:
**14.11.90 Bulletin 90/46**

(84) Etats contractants désignés:
**BE DE GB IT**

(56) Documents cités:
**EP-A- 0 200 162**

**PATENT ABSTRACTS OF JAPAN,
vol. 9, no. 290 (M-430)[2013], 16 novembre 1985; &
JP-A-60 130 485 (NIPPON DENSO K.K.) 11-07-1985**

(73) Titulaire: **AUTOMOBILES PEUGEOT, 75, avenue de la
Grande Armée, F-75116 Paris(FR)**
Titulaire: **AUTOMOBILES CITROEN, 62 Boulevard
Victor-Hugo, F-92200 Neuilly-sur-Seine(FR)**

(72) Inventeur: **Le Meunier, Georges, 61, rue du Bois Joli,
F-25550 Bavans(FR)**

(74) Mandataire: **Durand, Yves Armand Louis et al, Cabinet Z.
Weinstein 20, Avenue de Friedland, F-75008 Paris(FR)**

## Description

La présente invention a pour objet un dispositif automatique de remplacement des électrodes d'un robot de soudage.

On sait que les robots de soudage sont, d'une manière générale, équipés d'une pince à deux branches articulées portant chacune une électrode emmanchée à force, cette pince comportant des moyens d'actionnement des deux branches pour rapprocher ou éloigner l'une de l'autre les électrodes.

Ces électrodes sont généralement constituées par des embouts amovibles qui, à la longue, se détériorent et doivent être remplacés par des embouts neufs.

Cette opération de remplacement des électrodes ou embouts peut être réalisée manuellement à l'aide d'un outil approprié, ce qui, comme on le comprend, constitue une opération fastidieuse, longue et coûteuse.

On a également proposé, comme décrit dans le document EP-A 0 200 162, un dispositif automatique de remplacement des électrodes d'un robot de soudage, correspondant au préambule de la revendication 1. Cependant, outre le fait que ce dispositif est compliqué, notamment au niveau des moyens de préhension des embouts d'électrode, il ne résout pas le problème de l'extraction et du remplacement de ces embouts usés par simple traction axiale sur les embouts usés et par simple emmanchement axial d'embouts neufs sur la pince du robot.

Aussi, la présente invention a pour but de résoudre ce problème en proposant un dispositif simple associé au robot de soudage et permettant le remplacement automatique faible et rapide des embouts d'électrode usés par des embouts d'électrode neufs, sans risque d'endommager ces embouts.

A cet effet, l'invention a pour objet un dispositif automatique de remplacement des embouts des électrodes d'un robot de soudage comportant une pince à deux branches articulées portant chacune un embout d'électrode emmanché à force, et auquel robot sont associés d'une part un système d'extraction automatique des embouts usés vers lequel peut être amené le robot et qui comprend au moins un levier commandé par au moins un vérin et relié par une extrémité à la tige du vérin, et d'autre part un système de présentation d'embouts d'électrode neufs auquel parvient ensuite ledit robot, caractérisé en ce que ledit système de présentation est constitué par un barillet retenant des embouts d'électrode neufs et entraîné en rotation pas-à-pas au moyen d'un vérin, tandis que l'autre extrémité des leviers comporte une fourche et est montée pivotante au niveau d'une autre fourche prévue sur un support pour l'articulation des leviers, ces deux fourches pouvant s'engager sur les branches de la pince du robot pour réaliser l'extraction des embouts usés avant leur remplacement par des embouts neufs portés par le barillet.

On précisera encore ici que les vérins permettant l'extraction des embouts d'électrode usés, le vérin d'entraînement pas-à-pas du barillet, et les moyens d'actionnement de la pince du robot sont commandés par un circuit logique incorporé audit robot.

On comprend par conséquent qu'un robot de soudage équipé d'un dispositif conforme à l'invention pourra effectuer automatiquement la séquence d'opérations nécessaires pour extraire axialement les embouts détériorés et les remplacer par des embouts neufs.

Suivant une autre caractéristique, le barillet du système de présentation est constitué par un disque sur les deux faces duquel sont fixés un anneau sur lequel est monté une pluralité de clips retenant des embouts d'électrode neufs.

Selon encore une autre caractéristique de l'invention, la tige du vérin d'entraînement pas-à-pas du barillet porte une partie en forme de chape susceptible de coopérer avec des dents prévues sur la périphérie du disque constituant le barillet.

Mais d'autres caractéristiques et avantages de l'invention apparaîtront mieux dans la description détaillée qui suit et se réfère aux dessins annexés, donnés uniquement à titre d'exemple et dans lesquels :

La figure 1 est une vue schématique en élévation d'un robot de soudage auquel est associé un dispositif selon cette invention.

La figure 2 est une vue en perspective du système d'extraction des électrodes portées par les branches formant la pince du robot.

La figure 3 est une vue agrandie partielle et en coupe verticale des leviers et supports de levier appartenant au système d'extraction des électrodes du robot.

La figure 4 est une vue agrandie partielle et en coupe de l'extrémité des branches de la pince du robot portant des électrodes détériorées et qui doivent être remplacées;

La figure 5 est une vue en perspective partielle d'un levier articulé sur son support et appartenant au système d'extraction, et illustre l'extraction d'une électrode détériorée;

La figure 6 est une vue schématique et en perspective du système de présentation des électrodes neuves; et

La figure 7 est une demi-vue en coupe du barillet du système de présentation, suivant l'axe XX, visible sur la figure 6 et montre les branches de la pince du robot prêtes à recevoir des électrodes ou embouts neufs.

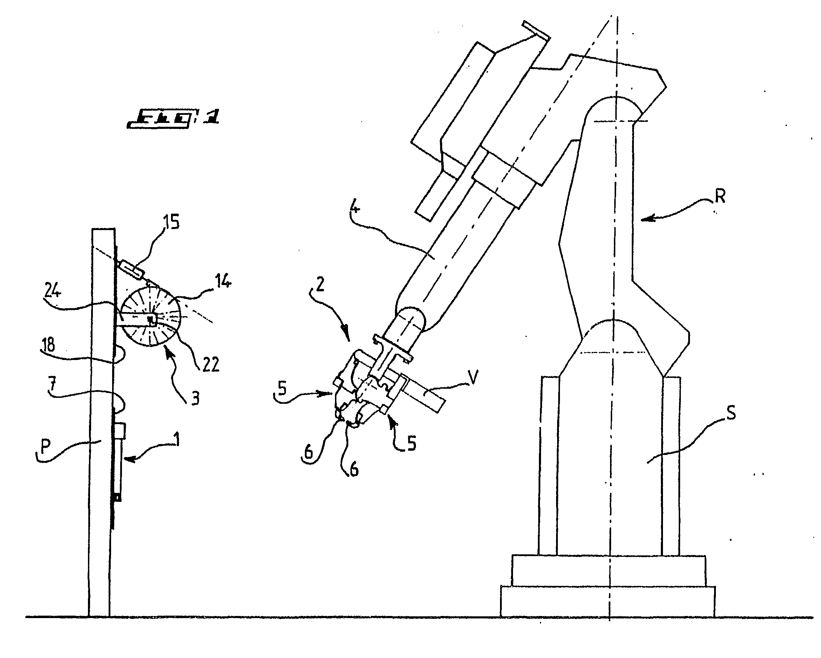

En se reportant à la figure 1, on voit un robot de soudage R auquel est associé, conformément à l'invention, un système 1 d'extraction automatique des électrodes usées portées par ce robot et vers lequel peut être amenée la tête 2 dudit robot, ainsi qu'un système 3 de présentation d'électrodes neuves que saisira le robot R après extraction des électrodes détériorées.

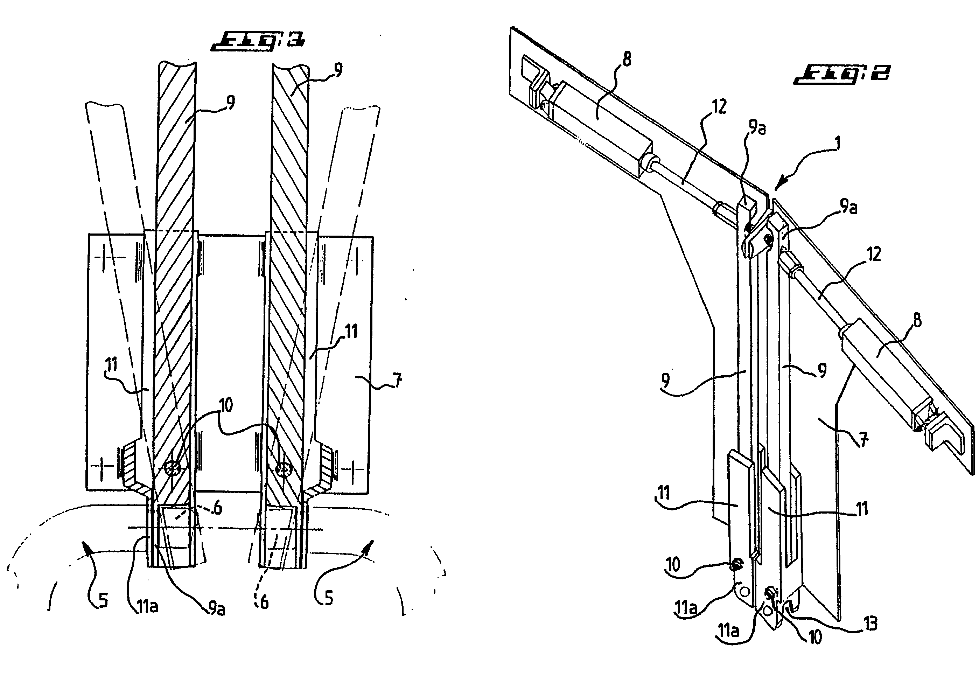

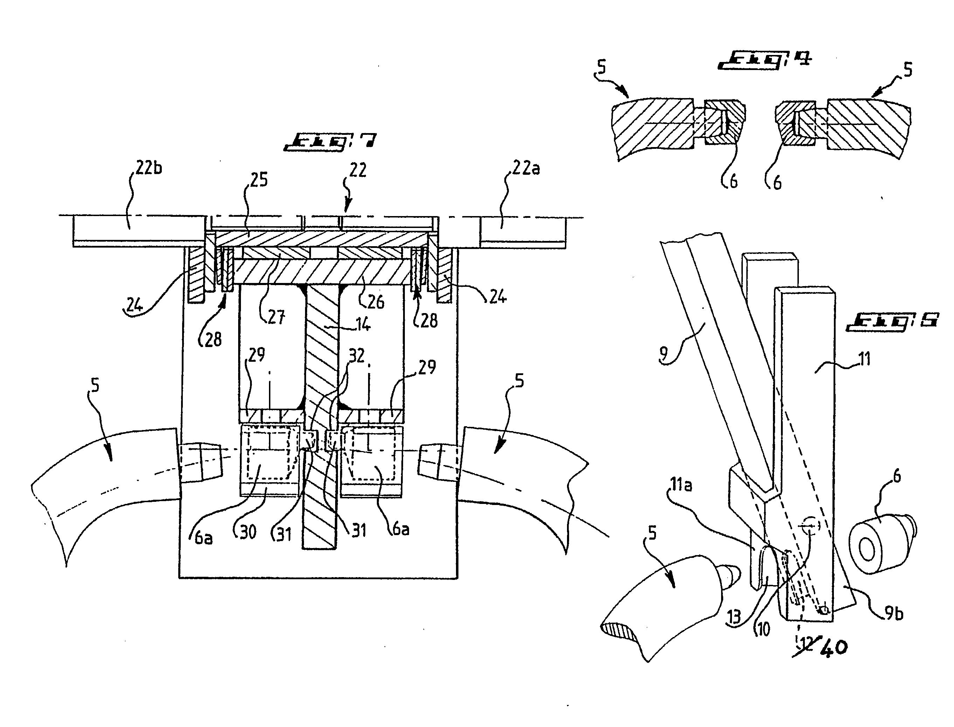

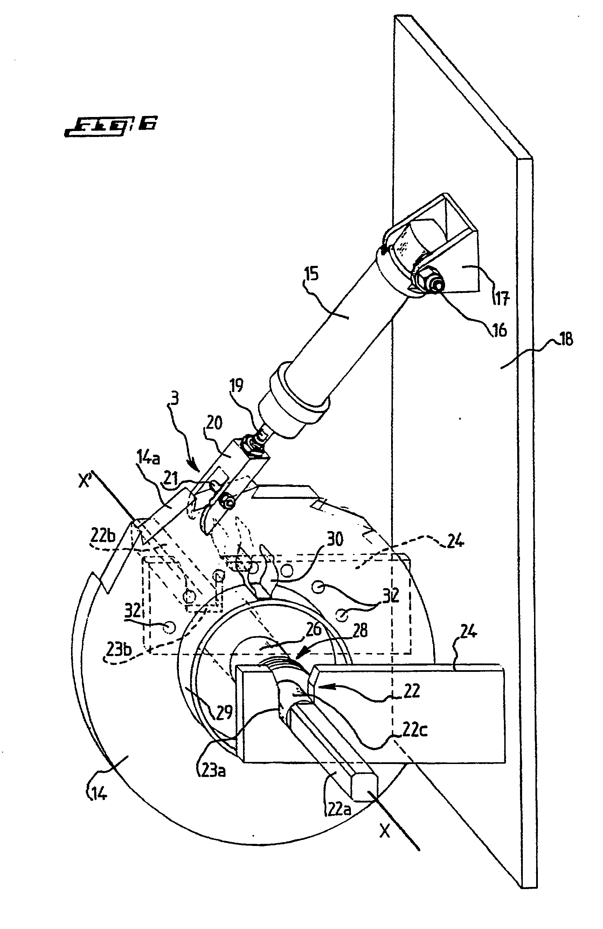

Le robot R comprend, d'une manière classique, un socle S portant un bras articulé 4 à l'extrémité duquel se trouve la tête 2 qui comprend essentiellement deux branches 5 pouvant être rapprochées ou éloignées l'une de l'autre au moyen d'un vérin V solidaire de la tête 2. Comme on le voit mieux sur la figure 4, les extrémités des branches 5 formant la pince du robot R sont munies chacune d'un embout d'élec-

2

trode 6 emmanché à force sur ladite extrémité. Les embouts 6 montrés sur cette figure 4 sont des embouts détériorés, c'est-à-dire possédant une extrémité usée et devant par conséquent être remplacés.

Le système 1 d'extraction de ces embouts, qui est, de même que le système de présentation 3, monté sur une potence ou analogue P au voisinage du robot R (figure 1) comprend essentiellement, comme on le voit sur la figure 2, un équipage solidaire d'un bâti 7 et essentiellement constitué par deux vérins 8 agissant respectivement sur des leviers 9 articulés chacun en 10 sur un support 11 qui présente grossièrement la forme d'une chape et que l'on voit mieux sur la figure 5.

Plus précisément, les vérins 8 comportent une tige 12 reliée à une extrémité 9a des leviers 9, tandis que l'autre extrémité 9b des leviers 9 comprend, comme on le voit mieux sur la figure 5, une partie en forme de fourche 40. Les extrémités 11a des supports ou chapes 11 comportent également une fourche 13, comme on le voit sur les figures 2 et 5. L'articulation 10 des leviers 9 aux supports 11 est située légèrement au-dessus des fourches 40 et 13 qui présentent toutes les deux sensiblement la même forme et permettent l'extraction des embouts d'électrode usé 6, comme on le décrira plus loin à propos du fonctionnement.

Le système de présentation 3 des électrodes neuves est, comme on le voit bien sur les figures 6 et 7 constitué par un barillet revêtant la forme d'un disque 14 entraîné en rotation par des moyens d'avance pas-à-pas revêtant, suivant l'exemple de réalisation représenté, la forme d'un vérin 15 dont une extrémité est articulée en 16 sur une chape ou analogue 17 solidaire d'une plaque 18 elle-même solidaire de la potence P. Le vérin 15 comporte une tige 19 se terminant par une partie en forme de chape 20 avec axe transversal 21 de façon à pouvoir coopérer avec des dents 14a prévues sur la tranche du disque 14. Ainsi, comme on le comprend, un entraînement pas-à-pas de ce disque peut être assuré.

Le disque 14 est monté tournant autour d'un axe 22 lui-même monté entre deux bras 24 solidaires de la plaque 18 et comportant chacun une encoche 23a, 23b recevant ledit axe 22.

Cet axe 22 est constitué par deux extrémités 22a, 22b vissées sur un cylindre 25. Les extrémités ou poignées 22a et 22b présentent une section transversale carrée et l'extrémité 22b coopère avec l'encoche 23b, tandis que l'autre extrémité 22a se prolonge par une partie 22c de section circulaire circonscrite au carré 22a et coopérant avec l'encoche 23a plus large que l'encoche 23b. On a donc réalisé ainsi un système détrompeur permettant le montage de l'axe 22 et donc du disque ou barillet 14 dans le bon sens entre les bras 24.

Le disque 14 comporte en son centre un manchon 26, bien visible sur la figure 7, et qui tourne sur l'axe 22 par l'intermédiaire de coussinets auto-lubrifiants 27.

Des rondelles de friction, repérées d'une manière générale en 28 sur les figures 6 et 7, procurent une friction entre le manchon 26, c'est-à-dire le barillet 14, et la partie fixe constituée par l'axe 22 et les bras 24. Une telle friction permettra une immobilisation précise du barillet 14 après le déplacement d'un pas provoqué par le vérin 15.

Sur chaque face du disque 14 est fixé, par soudage, un anneau 29 sur lequel est montée une pluralité de clips 30 susceptibles de retenir des embouts d'électrode neufs que l'on voit en 6a sur la figure 7. Ces embouts peuvent comporter un téton excentré 31 qui, lorsque les embouts sont clippés dans les clips 30, s'engage dans des logements 32 ménagés sur les faces du disque ou barillet 14, de façon à assurer ainsi une orientation correcte des embouts par rapport aux clips 30 et, par conséquent, par rapport aux branches 5 de la pince. Ainsi, les embouts 6a pourront s'emmancher correctement sur les bras 5 de la pince du robot à la fermeture de cette pince.

Mais on expliquera maintenant brièvement le fonctionnement du dispositif de l'invention qui se déduit d'ailleurs de la description qui précède.

Il faut tout d'abord remarque les vérins 8 du système d'extraction des embouts d'électrode 6 usés, le vérin 15 d'avancement pas-à-pas du barillet 14 et les moyens d'actionnement de la pince du robot, à savoir notamment le vérin V visible sur la figure 1, seront commandés par un circuit logique (non représenté) incorporé au circuit logique du robot R.

Lorsque les embouts 6 portés par les branches 5 sont détériorés, c'est-à-dire lorsque les tétons à l'extrémité de ces embouts sont usés, le bras 4 du robot R est amené vers le système d'extraction 1, de manière que les extrémités des branches 5 du robot se trouvent au niveau des extrémités 11a et 9b des supports 11 et leviers 9.

Plus précisément, les extrémités des branches 5 sont engagées dans les fourches 13 et 40 des supports 11 et leviers 9 respectivement. Ces fourches, comme on le comprend en se reportant à la figure 3, sont interposées entre les embouts usés 6 et les branches 5 qui les portent. Comme on le voit sur cette figure, ainsi que sur la figure 5, l'actionnement des vérins 8 provoquera l'extraction des embouts 6. Plus précisément, les leviers 9, en prenant appui sur les supports 11 provoqueront l'extraction des embouts usagés 6, comme cela est bien visible sur la figure 5.

Ensuite, le bras 4 du robot R est acheminé vers le système de présentation 3, et les branches 5 de la pince du robot se trouveront en vis-à-vis d'embouts neufs 6a portés par les clips 30 solidaires du barillet ou disque 14, et les embouts neufs 6a seront chaussés sur les branches 5 sous l'effet de la fermeture de la pince du robot, c'est-à-dire du rapprochement des branches 5.

Le robot ainsi rechargé en embouts neufs pourra reprendre son cycle normal de travail.

Il est bien entendu que toute les opérations décrites ci-dessus sont effectuées automatiquement.

On a donc réalisé un dispositif automatique de remplacement d'électrodes d'un robot qui n'exige aucune main d'oeuvre pour effectuer ce remplacement et qui permet une cadence de remplacement très rapide et donc un gain de temps très important sur les chaînes de fabrication des véhicules automobiles notamment.

Le nombre d'embouts neufs 6a portés par le barillet 14, ou la fixation des clips 30 sur ce barillet peuvent être quelconques, de même que les moyens de liaison entre ledit barillet et l'axe 22.

## Revendications

1. Dispositif automatique de remplacement des embouts des électrodes d'un robot (R) de soudage comportant une pince à deux branches articulées (5) portant chacune un embout d'électrode emmanché à force, et auquel robot sont associés d'une part un système (1) d'extraction automatique des embouts usés (6) vers lequel peut être amené le robot (R) et qui comprend au moins un levier (9) commandé par au moins un vérin (8) et relié par une extrémité (9a) à la tige (12) du vérin, et d'autre part un système (3) de présentation d'embouts d'électrode neufs (6a) auquel parvient ensuite ledit robot, caractérisé en ce que ledit système (3) de présentation est constitué par un barillet (14) retenant des embouts d'électrode neufs (6a) et entraîné en rotation pas-à-pas au moyen d'un vérin (15), tandis que l'autre extrémité (9b) des leviers (9) comporte une fourche (40) et est montée pivotante au niveau d'une autre fourche (13) prévue sur un support (11) pour l'articulation des leviers, ces deux fourches (40, 13) pouvant s'engager sur les branches (5) de la pince du robot (R) pour réaliser l'extraction des embouts usés (6) avant leur remplacement par des embouts neufs (6a) portés par le barillet (14).

2. Dispositif selon la revendication 1, caractérisé en ce que les vérins précités (8) permettant l'extraction des embouts d'électrode usés (6), le vérin (15) d'entraînement pas-à-pas du barillet (14) et les moyens d'actionnement de la pince du robot (R) sont commandés par un circuit logique incorporé audit robot.

3. Dispositif selon la revendication 1 ou 2, caractérisé en ce que le barillet précité (14) est constitué par un disque sur les deux faces duquel est fixé un anneau (29) sur lequel est monté une pluralité de clips (30) retenant des embouts d'électrode neufs (6a).

4. Dispositif selon l'une des revendications 1 à 3, caractérisé en ce que la tige (19) du vérin (15) d'entraînement pas-à-pas du barillet (14) porte une partie en forme de chape (20) susceptible de coopérer avec des dents (14a) prévues sur la périphérie du disque constituant le barillet.

## Patentansprüche

1. Selbsttätige Vorrichtung zum Ersetzen der Endstücke eines Schweißroboters (R) mit einer Zange mit zwei jeweils ein mit Gewalt aufgestecktes Elektrodenendstück tragenden angelenkten Armen (5) und welchem Roboter einerseits ein System (1) zum automatischen Herausziehen der abgenutzten Endstücke (6), zu welchem der Roboter (R) hinzugeführt werden kann und welches wenigstens einen durch wenigstens einen Kraftzylinder (8) betätigten und mit einem Ende (9a) an die Stange (12) des Kraftzylinders angeschloßenen Hebel (9) aufweist, und andererseits ein System (3) zur Darbietung von neuen Elektrodenendstücken (6a), zu welchem dann der besagte Roboter gelangt, zugeordnet sind, dadurch gekennzeichnet, daß das besagte Darbietungssystem (3) durch eine, neue Elektrodenendstücke (6a) zurückhaltende und mittels eines Kraftzylinders (15) schrittweise gedrehte Trommel (14) gebildet wird, während das andere Ende (9b) der Hebel (9) eine Gabel (40) aufweist und schwenkbar im Bereich einer anderen, auf einem Halter (11) für die Gelenkverbindung der Hebel vorgesehenen Gabel (13) schwenkbar angeordnet ist, wobei diese beiden Gabeln (40, 13) auf die Arme (5) der Zange des Roboters (R) aufsteckbar sind, um das Herausziehen der abgenutzten Endstücke (6) vor deren Ersatz durch, von der Trommel (14) getragene, neue Endstücke (6a) zu gewährleisten.

2. Vorrichtung nach Anspruch 1, dadurch gekennzeichnet, daß die, das Herausziehen der abgenutzten Elektrodenendstücke (6) ermöglichenden vorgenannten Kraftzylinder (8), der Kraftzylinder (15) zum schrittweisen Antrieb der Trommel (14) und die Mittel zur Betätigung der Zange des Roboters (R) durch einen in dem besagten Roboter eingebauten logischen Schaltkreis gesteuert werden.

3. Vorrichtung nach Anspruch 1 oder 2, dadurch gekennzeichnet, daß die vorgenannte Trommel (14) durch eine Scheibe gebildet wird, auf deren beiden Seiten ein Ring (29) befestigt ist, an welchem eine Vielzahl von, neue Elektrodenendstücke (6a) zurückhaltenden Klemmgliedern (30) angeordnet ist.

4. Vorrichtung nach einem der Ansprüche 1 bis 3, dadurch gekennzeichnet, daß die Stange (19) des Kraftzylinders (15) zum schrittweisen Antrieb der Trommel (14) einen bügelförmigen Teil (20) trägt, der fähig ist, mit den an dem Umfang der die Trommel bildenden Scheibe vorgesehenen Zähne (14a) zusammenzuwirken.

## Claims

1. Automatic device for replacing tips of electrodes of a welding robot (R) comprising tongs with two pivoted arms (5) carrying each one a force-fitted electrode tip and with which robot are associated on the one hand a system (1) for the automatic extraction of the worn tips (6), towards which the robot (R) may be brought and which comprises at least one lever (9) controlled by at least one jack (8) and connected with one end (9a) to the rod (12) of the jack and on the other hand a system (3) for presenting new electrode tips (6a) at which then arrives the said robot, characterized in that the said presentation system (3) is constituted by a barrel (14) retaining new electrode tips (6a) and rotated stepwise by means of a jack (15) whereas the other end (9b) of the levers (9) comprises a fork (40) and is pivotally mounted at another fork (13) provided on a support (11) for the pivotal connection of the levers, these two forks (40, 13) being engageable onto the arms (5) of the tongs of the robot (R) to effect the extraction of the worn tips (6) before their replacement by new tips (6a) carried by the barrel (14).

2. Device according to claim 1, characterized in that the aforesaid jacks (8) permitting the extraction of the worn electrode tips (6), the jack (15) for the stepwise drive of the barrel (14) and the means for actuating the tongs of the robot (R) are controlled by a logic circuit incorporated into the said robot.

3. Device according to claim 1 or 2, characterized in that the aforesaid barrel (14) is constituted by a disk on both faces of which is secured a ring (29) onto which is mounted a plurality of clips (30) retaining new electrode tips (6a).

4. Device according to one of claims 1 to 3, characterized in that the rod (19) of the jack (15) for the stepwise drive of the barrel (14) carries a clevis-shaped portion (20) likely to co-operate with teeth (14a) provided on the periphery of the disk constituting the barrel.

Fig. 1

Fig.2

Fig.3

Fig.4

Fig.5

Fig.7

Fig 6